# EUROPEAN PATENT APPLICATION

(11) **EP 4 706 902 A1**
(43) Date of publication of application: **11.03.2026**
(21) Application number: 24199249.4
(22) Date of filing: 09.09.2024
(51) Int. Cl.: B25J 9/16, G05B 19/42, G06F 3/01

(54) **COLLECTING TRAINING DATA FOR A ROBOTIC HAND MANIPULATOR**

(71) Applicant: Mimic robotics AG, 8092 Zurich (CH)
(72) Inventor: Nava, Elvis, 8057 Zurich (CH); Gravert, Stephan-Daniel, 8048 Zurich (CH); Weirich, Stefan, 8952 Schlieren (CH); Forrai, Benedek, 8800 Thalwil (CH)
(74) Representative: Best, Bastian

(57) **Abstract**

Disclosed is a method for collecting training data for a robotic hand manipulator for automating a manual task of a human. Furthermore, a method for automating a manual task is disclosed. Finally, corresponding devices and systems are disclosed.

## Description

### TECHNICAL FIELD

The present disclosure generally relates to the field of robotics, and more particularly to techniques for collecting training data for a robotic hand manipulator to automate a manual task of a human.

### BACKGROUND

Artificial intelligence, in particular machine-learning, has become a common approach for teaching a robotic hand manipulator how to perform certain tasks. One key challenge in order to achieve a well enough automation performance of the robot, is the availability as well as quality of training data.

For this purpose, systems known in the art provide controllers attached to the robotic hand manipulator. A human may carry these controllers and thus also the robotic hand manipulator attached to it and perform a manual task with it by issuing control commands for robot actions via the controller. This way, training data for the specific task which is to be automated can be collected.

Sanches et al. "Scalable, Intuitive Human to Robot Skill Transfer with Wearable Human Machine Interfaces: On Complex, Dexterous Tasks*"* discloses an example of such a system. In the disclosed system, a human can move the fingers of a robotic hand by pressing buttons of a controller attached to the robotic hand. This way, a task can be performed to collect data.

However, these approaches are inefficient when it comes to resource usage, provide poor usability as well as lack scalability because they require dedicated training to be able to control the robot.

It is therefore an objective of the present disclosure to provide a technique for collecting training data for a robotic hand manipulator to automate manual tasks, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

As a general overview, certain aspects of the present disclosure provide a way of efficiently collecting humanoid training data for a robotic hand manipulator for automating manual tasks.

One aspect of the present disclosure relates to a method for collecting training data, in particular for a robotic hand manipulator, to automate a manual task of a human. The method may comprise providing a sensorised device configured to be worn by the human while performing the manual task. The method may comprise collecting, using the sensorised device, the training data while the human performs the manual task.

Throughout the present disclosure, a "sensorised device" may be understood as a device at least partially encapsulating the hand of a human, in particular the outer surface of the human hand. In this regard, "worn" is to be differentiated from "carried". In other words, a sensorised device configured to be worn is not merely carried (e.g., as the devices known in the art), but may be worn such that the human him-/herself is able to perform the task with his/her own hand. In contrast, a device configured to be carried may refer to a robotic hand manipulator equipped with a controller wherein the controller is carried by the human and used for controlling the robotic hand manipulator to collect corresponding data.

An example of a sensorised device configured to be worn may be a glove. The human may slip into the glove such that the hand of the human is at least partially encapsulated. For example, while the inner surface of the hand (e.g. the palm) may not be encapsulated, the outer surface of the hand (e.g., the back of the hand) may be encapsulated. In addition, each finger of the hand may be encapsulated individually. In other words, the sensorised device may encapsulate the back of each finger while the space between the fingers may not be encapsulated.

This way, an efficient way of collecting training data is provided. One advantage is that no further hardware (e.g., the robotic hand manipulator) except the sensorised device is needed for collecting the data. A further advantage is that no experience with controlling a robot is needed. In other words, the human does not have to be accustomed to handling the robot as required in the systems known in the art. Instead, the human may simply perform the task as usually (i.e., using their own hands) with the difference that he/she is wearing the present sensorised device during the performing.

According to another aspect of the present disclosure, during the collecting, the robotic hand manipulator may not be present at a location at which the human performs the manual task and/or the robotic hand manipulator may not be controlled by the human.

As outlined above, systems known in the art require the presence of the robot (i.e., the training data is collected while the robot is controlled by a human to perform the task). As a result, these systems lack flexibility and scalability. In contrast, the method of the present disclosure overcomes this drawback by providing a sensorised device configured to be worn which means that the robotic hand manipulator no longer needs to be present and/or controlled for collecting the data.

According to another aspect of the present disclosure, the sensorised device may comprise a sensor system for collecting the data which is substantially identical to a sensor system of the robotic hand manipulator. The sensor system of the sensorised device and/or the sensor system of the robotic hand manipulator may comprise a finger tracking system, a wrist tracking system, a camera system a touch sensing system or any combination thereof.

Throughout the present disclosure, "substantially identical" should be understood as configured such that both sensor systems produce the same sensor data (i.e., the same sensor information in the same data format). This means, while the sensor systems may be identical, there may also be slight difference. In other words, "substantial identical" may refer to configurations of both sensor systems which are not 100% identical but produce the same sensor data or at least produce sensor data based on which the same sensor information can be derived (e.g., regarding joint angles, sensor data for a magnetic joint encoder may be a magnetic field strength and orientation based on which sensor information about the joint angle may be derived by means of calculation/interpretation). For example, while both sensor systems produce the same data (e.g., the finger joint positions), different sensor types as well as sensor positionings may be used to do so. For example, tracking of finger positions on the sensorised device may be done with IMUs while tracking of finger positions on the robotic hand manipulator may be done with joint encoders. For example, tracking of a fingertip position may be done by positioning a corresponding sensor on the fingertip. As a result, while the sensor configurations differ, the sensor systems may produce the same sensor data (i.e., the position of the fingertip).

This way, meaningful training data for training the robotic hand manipulator may be collected using the sensorised device without requiring the robotic hand manipulator to be present. Furthermore, cumbersome post-processing can be avoided saving corresponding processing resources as well as avoiding inaccuracies within the training data.

According to another aspect of the present disclosure, one or more or all sensors of the sensor system of the sensorised device may be attached to an outer surface of the sensorised device. Corresponding one or more or all sensors of the robotic hand manipulator may also be attached to an outer surface of the robotic hand manipulator.

Throughout the present disclosure, "outer surface of the sensorised device" should be understood as an outer surface of a layer (hereinafter "sensor layer") of the sensorised device which at least partially encapsulates the hand of the human. The sensor layer may be in direct contact with the hand of the human. Alternatively, there may be one or more other layers placed between the hand of the user and the sensor. The sensor layer may also be covered with one or more additional layers (i.e., another layer may be placed on top of the sensor layer). A layer placed on top of the sensor layer may provide additional protection for the sensors. A layer placed between the hand and the sensor layer may improve the usability of the sensorised device (e.g., with respect to comfort of wearing the sensorised device).

Throughout the present disclosure, "outer surface of the robotic hand manipulator" should be understood as the outer surface of a rigid structural body. The outer surface of the rigid structural body may also be covered with one or more layers (e.g., with a layer of compliant material for interaction such as a silicone skin or a protective layer to protect the sensor system of the robotic hand manipulator from external influences such as dirt, liquid etc.).

Systems known in the art typically place their sensor as close as possible to key positions (e.g., inside the finger joints) of the robotic hand manipulator. This way, sensor information may be collected in a highly precise manner. However, this makes it impossible to provide a corresponding sensorised device which can be worn by a human, because sensors may not be placed inside the fingers of the human. As a result, systems known in the art are limited to controllers for the robotic hand manipulator in order to collect training data.

This limitation is overcome by fundamentally changing the way how robot sensor systems are designed, namely no longer positioning sensors in a way that they collect the data in the most precise manner but instead position them in a way that a corresponding sensorised device with substantially the same sensor system as the robotic hand manipulator can be worn by a human.

According to another aspect of the present disclosure, the sensorised device may comprise a plurality of finger sleeves. For example, the plurality of finger sleeves may comprise two, three, four, five or more finger sleeves. The robotic hand manipulator may comprise a corresponding plurality of robotic fingers. Each finger sleeve of the plurality of the finger sleeves of the sensorised device may correspond to one robotic finger of the plurality of robotic fingers of the robotic hand manipulator.

This way, it can be ensured that both devices produce the same sensor data by mapping each finger sleeve of the sensorised device (i.e., and thus the finger(s) of the human wearing the sensorised device) to a corresponding finger of the robotic hand manipulator.

According to another aspect of the present disclosure, a format of the collected training data is the same as it would be when collected while the robotic hand manipulator performs the manual task, preferably while being teleoperated. The format may be in the form of a compressed data array.

This way, a better interoperability between the training data collected with the sensorised device and the robotic hand manipulator is achieved. As a result, the training the robotic hand manipulator on the manual task with the collected training data may achieve a better performance compared to training with data collected in another way.

According to another aspect of the present disclosure, the collecting may comprise teleoperating the robotic hand manipulator to perform the manual task, collecting, during the teleoperating, robot data of the robotic hand manipulator performing the manual task, and/or augmenting the training data with the robot data.

Throughout the present disclosure, "robot data" should be understood as a training data which was collected by teleoperating the robotic hand manipulator and/or during autonomous execution. As the sensor systems of both, the sensorised device as well as the robotic hand manipulator may be substantially identical and/or produce sensor data of the same format, the training data collected with the sensorised device may be simply augmented with the robot data (i.e., the training data samples of the robot data may simply be added to the training data samples of the training data collected by the sensorised device without requiring post-processing).

This way, the training data collected with the sensorised device may be augmented (e.g., enriched). As a result, data availability is improved as more training data for training the robotic hand manipulator is provided.

According to another aspect of the present disclosure, the training data may comprise one or more data modalities and one or more corresponding performed actions. The one or more data modalities may comprise a plurality of images, one or more proprioceptive sensory measurement values, point cloud data, tactile sensor data, torque sensor data, force sensor data, audio data and/or natural language data. Preferably, the images comprise RGB images. Preferably, the plurality of images represents one or more sequences of images (e.g., a video). Preferably, the one or more proprioceptive sensory measurement values comprise a wrist position and/or one or more finger positions and/or joint angles.

This way, an all-encompassing state for the robotic hand manipulator may be collected for each action required for automating the manual task. As a result, the performance of the automation is improved.

Another aspect of the present disclosure relates to a method for automating a manual task using a robotic hand manipulator. The method may comprise obtaining training data for automating the manual task as collected by the method for collecting training data for a robotic hand manipulator of any one of the aspects described herein. The method may comprise training the robotic hand manipulator on the manual task using the obtained training data. The method may comprise deploying the trained robotic hand manipulator at a location at which the manual task is to be automated and/or providing the trained robotic hand manipulator for deploying the trained robotic hand manipulator at the location at which the manual task is to be automated.

This way, a manual task may be efficiently automated using a robotic hand manipulator without the need of extensive hardware requirements as outlined above.

According to another aspect of the present disclosure, training the robotic hand manipulator may comprise training a machine-learning model for generating robot actions. The machine-learning model may be configured to take as input one or more of the data modalities, generate one or more corresponding robot actions of the robotic hand manipulator and evaluate the one or more robot actions based on the one or more performed actions corresponding to the one or more data modalities.

This way, the machine-learning model after training is capable of generating the correct robot actions for automating the manual task given the input provided by the sensor system of the robotic hand manipulator. As a result, the robotic hand manipulator performs the correct actions at a certain point in time for automating the manual task.

According to another aspect of the present disclosure, the machine-learning model may comprise different sub-models for different data modalities.

This way, computational resources may be efficiently utilized. This is because training of sub-models for different data modalities requires less computational resources than training one large model for all data modalities.

According to another aspect of the present disclosure, the machine-learning model may be pretrained on a plurality of manual tasks and training the machine-learning model using the collected training data may correspond to fine-tuning the machine-learning model.

This way, the model does not have to be trained from scratch. Instead, a pre-trained model which is already capable of generating a plurality of actions (e.g., basic motions such as gripping, pinching etc.) may be used and fine-tuned for the manual task to be automated using the collected training data. As a result, not only computational resources required for training the machine-learning model are reduced, but also the amount of data required for training the machine-learning model is reduced.

Another aspect of the present disclosure relates to a data processing device or system comprising means for performing the method(s) of any one of the aspects described herein.

Another aspect of the present disclosure relates to a computer program or a computer-readable medium having stored thereon a computer program, the computer program comprising instructions, which when executed by a computer, cause the computer to perform the method(s) of any one of the aspects described herein.

Another aspect of the present disclosure relates to a sensorised device configured to be worn by the human while performing a manual task and to collect training data while the human performs the manual task. The sensorised device may be configured to perform the method(s) of any one of the aspects described herein. The sensorised device may be configured according to any one of the aspects described herein.

Another aspect of the present disclosure relates to a robotic hand manipulator configured to be trained using training data as collected by any one of the aspects described herein. The robotic hand manipulator may be configured according to any one of the aspects described herein.

Another aspect of the present disclosure relates to a system for collecting training data for a robotic hand manipulator for automating a manual task of a human. The system may comprise a sensorised device according to any one of the aspects described herein. The sensorised device may be configured to be worn by the human while performing the manual task and to collect the training data while the human performs the manual task. The system may comprise a robotic hand manipulator according to any one of the aspects described herein. The robotic hand manipulator may be configured to be trained using the collected training data to automate the manual task of the human.

### BRIEF DESCRIPTION OF THE DRAWINGS

The disclosure may be better understood by reference to the following drawings:
- Fig. 1:: A flow chart of a method for collecting training data in accordance with embodiments of the present disclosure.
- Fig. 2:: A flowchart of a method for automating a manual task in accordance with embodiments of the present disclosure.
- Fig. 3:: An apparatus or system for collecting training data and/or automating a manual task in accordance with embodiments of the present disclosure.
- Fig 4:: A first system overview for collecting training data and/or automating a manual task in accordance with embodiments of the present disclosure.
- Fig 5:: A second system overview for collecting training data and/or automating a manual task in accordance with embodiments of the present disclosure.
- Fig. 6:: A sensorised device in the form of a glove for collecting training data in accordance with embodiments of the present disclosure.
- Fig. 7:: A robotic hand manipulator in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

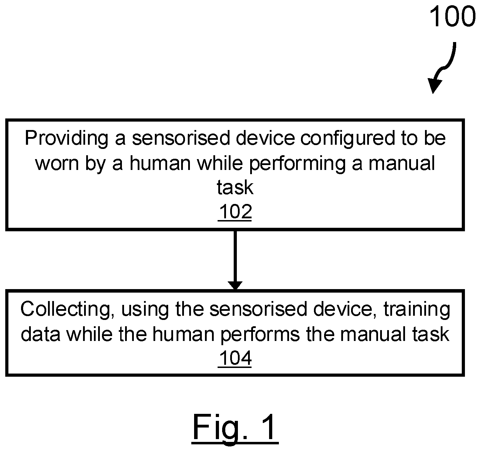

Fig. 1 illustrates a flowchart of a method 100 for collecting training data for a robotic hand manipulator to automate a manual task of a human in accordance with an exemplary embodiment.

The method 100 may comprise providing (step 102) a sensorised device configured to be worn by a human while performing a manual task.

The method 100 may comprise collecting (step 104), using the sensorised device, training data while the human performs the manual task.

The method 100 may further comprise any aspects as described herein.

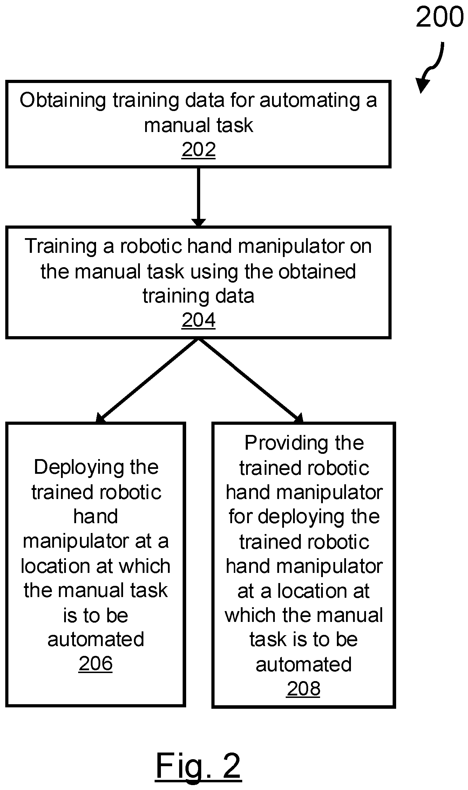

Fig. 2 illustrates a flowchart of a method 200 for automating a manual task using a robotic hand manipulator in accordance with an exemplary embodiment.

The method 200 may comprise obtaining (step 202) training data for automating the manual task as collected by the method of any one of the aspects (e.g., method 100 of Fig. 1).

The method 200 may comprise training (step 204) the robotic hand manipulator on the manual task using the obtained training data.

The method 200 may comprise deploying (step 206) the trained robotic hand manipulator at a location at which the manual task is to be automated. Alternatively or additionally, the method 200 may comprise providing (step 208) the trained robotic hand manipulator for deploying the trained robotic hand manipulator at the location at which the manual task is to be automated.

The method 200 may further comprise any aspects as described herein.

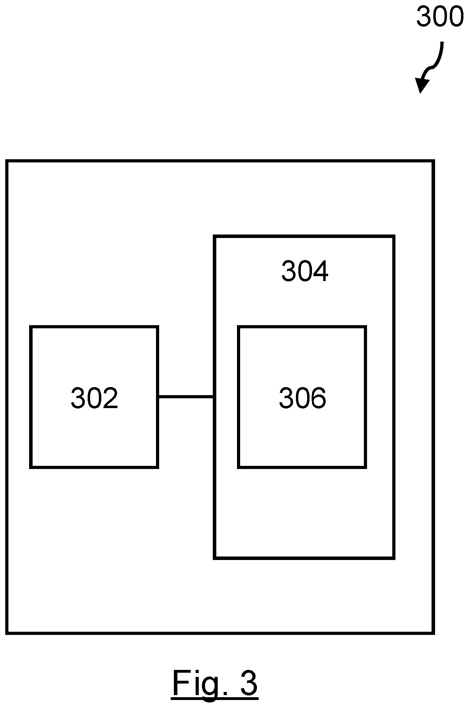

Fig. 3 illustrates an apparatus or system 300 for collecting training data and/or automating a manual task according to an exemplary embodiment of the present invention.

The data processing apparatus 300 may comprise means for performing the method(s) according to the present disclosure (e.g., the method 100 and/or the method 200). The means may comprise a processor 302 and a memory 304. The processor 302 and the memory 304 may be operatively connected. The memory 304 may store a computer program 306, wherein the computer program 306 comprises instructions that, when the computer program 306 is executed by a computer, cause the computer to execute the method(s) according to any of the aforementioned aspects (e.g., the method 100 and/or the method 200).

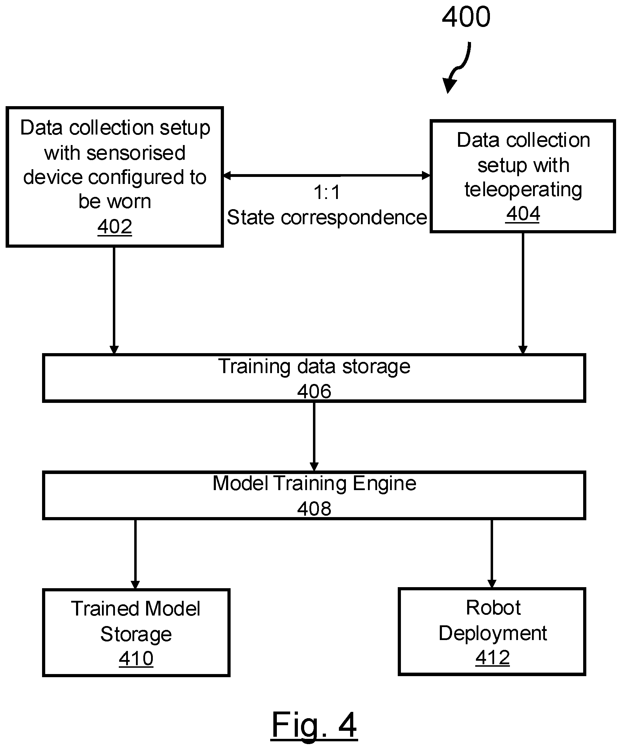

Fig 4 illustrates a first system overview 400 for collecting training data and/or automating a manual task in accordance with embodiments of the present disclosure. The system may use the methods for collecting training data for a robotic hand manipulator and automating a manual task according to the aspects of the present disclosure (e.g., method 100 and/or 200).

Data collection setup 402 involves a human performing a manual task which is to be automated. While performing the manual task, the human wears a sensorised device configured to be worn and to collect training data of the human performing the task. In other words, a human performs the task with his/her own hands while wearing the sensorised device to collect the training data. Accordingly, the presence of the robotic hand manipulator and/or controlling the robotic hand manipulator is not needed (e.g. in contrast to common approaches for robot teaching or teleoperation). Thus, deployment of data collection setup 402 may be swiftly achieved without requiring any dedicated hardware (e.g. the robotic hand manipulator) other than the sensorised device configured to be worn by the human.

Data collection setup 404 may be used to augment the training data collected by data collection setup 402. Data collection setup 404 involves a robotic hand manipulator (e.g. a robotic hand attached to a robot arm). For example, the robotic hand manipulator may be teleoperated to perform the manual task during which robot data is collected. The training data may then be augmented with the collected robot data.

Both data collection setups 402,404 may have a 1:1 state correspondence. In other words, the data collected by both setups may have the same format. Accordingly, the training data collected by setup 402 may be indistinguishable from the robot data collected by setup 404. For this purpose, the sensor systems of both components (i.e. the sensorised device and the robotic hand manipulator) may be substantially identical.

The training data collected by data collection setup 402 may be stored within the training data storage 406. In case the data collection setup 404 was used, the training data augmented with the robot data may be stored within the training data storage or the training data collected by data collection setup 402 and the robot data collected by data collection setup 404 may be stored individually in the training data storage 406. In this case, augmentation of the training data with the robot data may be performed before training the robotic hand manipulator. The training data storage 406 may be a cloud storage allowing for easy accessibility as well as scalability of the data collection process. The training data storage 406 may also comprise other, available data sets of human and robot data (e.g., open-source datasets) which have been converted to the data format as collected by the data collection setups 402, 404. The training data storage 406 may also comprise training data collected by the data collection setups 402 and/or 404 while performing tasks other than task to be automated (e.g., training data collected for previously automated tasks).

Model training engine 408 may be used to train the robot, in particular a machine-learning model for generating robot actions. The machine-learning model may comprise or be implemented by a neural network. For example, the machine-learning model may take as input a sequence of images and proprioceptive data and output a sequence (i.e. one or more) of N future robot actions (with N>1). The machine-learning model may comprise a plurality of different sub-models. For example, the machine-learning model may comprise a main backbone sub-model such as a transformer, UNet etc. For improved processing capability of the images, the machine-learning model may comprise a vision backbone sub-model plugged into the main backbone sub-model such as ConvNet/ResNet, Vision Transformer etc. Depending on the used data modalities, the machine-learning model may comprise alternative or additional backbone sub-models. The machine-learning model may be trained with a variety of methods, such as next-token-prediction loss or a diffusion loss/policy. The result of the training (i.e., the trained model represented by its weights, checkpoints or other parameters) may be stored in the trained model storage 410.

Robot deployment 412 may use trained machine-learning model stored in the trained model storage 410 to deploy the robotic hand manipulator at the location at with the manual task is to be automated. The robotic hand manipulator or an associated processing unit may be equipped with a local GPU to run the trained machine-learning model locally. In other words, the trained machine-learning model may take corresponding input measured by the sensor system of the robotic hand manipulator and may output corresponding one or more robot actions based on which the robotic hand manipulator is capable of automating the manual task.

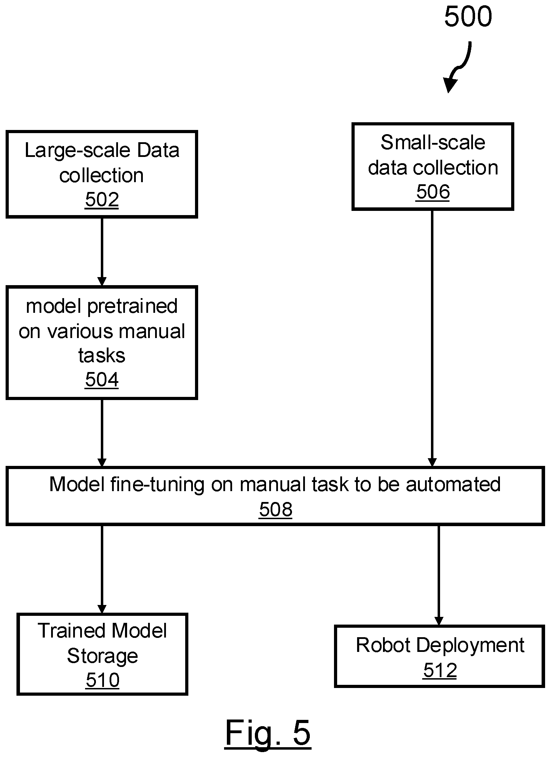

Fig 5 illustrates second system overview 500 for collecting training data and/or automating a manual task in accordance with embodiments of the present disclosure. The system may use the methods for collecting training data for a robotic hand manipulator and automating a manual task according to the aspects of the present disclosure (e.g., method 100 and/or 200).

The large-scale data collection 502 may be used to collect training data on a variety of tasks. The training data may be collected using the sensorised device and/or using teleoperating. The tasks may comprise motions of different complexity. For example, basic motions (e.g., movement patterns of fingers, bending the wrist joint etc.), simple tasks (e.g., gripping, pinching), or other manual tasks which have been automated previously using the methods according to the aspects of the present disclosure. The large-scale data collection 502 may also comprise other, available data sets of human and robot data converted into the correct data format.

Using the training data collected by the large-scale data collection 502, a model may be pretrained 504. The result is a general-purpose and multi-task model capable of predicting future robot actions for various tasks in a variety of robotic embodiments.

In order to automate a new manual task, this general-purpose model may however not perform sufficiently well but may serve as a good starting point. Thus, once task specific training data (i.e., training data for the manual task to be automated) is collected by the small-scale data collection 506, the general-purpose model may be fine-tuned 508 on the new manual task using the training data collected by the small-scale data collection 506. The small-scale data collection 506 may comprise performing the method for collecting training data (e.g., method 100 of Fig. 1) at the location at which the task is to be automated. A human may wear the sensorised device and collect training data while performing the task. This way, a humanoid robotics fine-tuning data set may rapidly be collected without the need of robot experts (i.e., workers having experience with controlling a robot) or the robot being around.

Once the model has been fine-tuned, the trained model may be stored in the trained model storage 510 and/or deployed at the location at which the manual task is to be automated 512.

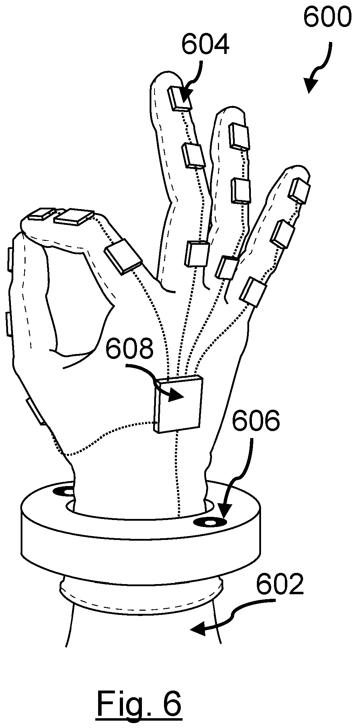

Fig. 6 illustrates a sensorised device 600 for collecting training data in accordance with certain embodiments of the present disclosure. In the present example, the sensorised device 600 is implemented as a glove. However, as outlined above, the sensorised device 600 according to aspects of the present disclosure is not limited to the design of a glove.

As can be seen, the sensorised device 600 is configured to be worn. Accordingly, a human 602 may wear the sensorised device 600 and this way collect training data while performing a manual task which is to be automated. In the present example, the human 602 is performing a pinching motion. Accordingly, the sensor system of the sensorised device 600 may collect the corresponding data and together with the annotated action performed (e.g., pinching), a sample of training data is created.

In the present example, the sensor system comprises a plurality of sensors 604 for collecting sensor data about the fingers of the human. The sensors 604 may be IMUs (Inertial measurement units). In addition, the sensor system comprises a sensor 606, such as a camera system comprising one or more cameras, for collecting images. Based on the images, visual feedback and/or information about an environment in which the task is performed and/or information about objects to be manipulated may be derived. The sensor data collected by the sensors of the sensor system may be transferred to a data-processing apparatus 608 which may receive the data, store the data and/or transmit the data to a remote storage (e.g., the training data storage 406 of Fig. 4). Alternatively or additionally, the reference sign 608 may also relate to sensor for collecting the palm body position. The sensors of the sensor system may be connected via communication connections (indicated by the dotted lines). These communication connections may be wired (e.g., via a cable) or wireless (e.g., via wireless communication protocols such as BLE etc.).

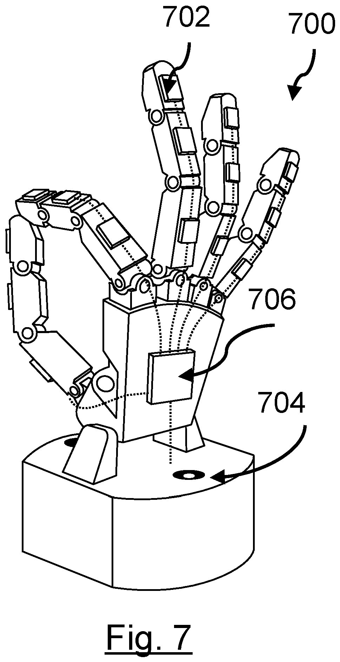

As can be seen, the sensors 604 and 606 are positioned at an outer surface of the sensorised device 600 (i.e., at a sensor layer as explained above). This allows a human to wear the sensorised device 600 while still being able to collect meaningful data based on which a robotic hand manipulator (e.g., the robotic hand manipulator 700 of Fig. 7) can be trained to automate the manual task.

Fig. 7 illustrates a robotic hand manipulator 700 in accordance with certain embodiments of the present disclosure. In the illustrated example, the robotic hand manipulator 700 is performing a pinching action which may correspond to the pinching action illustrated in Fig. 6.

In the present example, the robotic hand manipulator 700 comprises five robotic fingers. As can be seen, the sensor system of the robotic hand manipulator 700 is substantially identical to the sensor system of the sensorised device 600. Accordingly, the sensor system of the robotic hand manipulator 700 also comprises a plurality of sensors 702 for processing sensor data about the robotic fingers of the robotic hand manipulator 700. The sensors 702 may be IMUs (Inertial measurement units). Furthermore, the sensor system of the robotic hand manipulator 700 comprises a sensor 704, such as a camera system comprising one or more cameras, for collecting images. Based on the images, visual feedback and/or information about an environment in which the task is performed and/or information about objects to be manipulated may be derived. The corresponding sensor data may be processed by a data-processing apparatus 706 (e.g., for collecting the sensor data, providing it as input for a corresponding machine-learning model trained to generate robot actions based on the input, and to issue a robot action command based on the output of the machine-learning model). Alternatively or additionally, the reference sign 706 may also relate to sensor for collecting the palm body position. The sensors of the sensor system may be connected via communication connections (indicated by the dotted lines). These communication connections may be wired (e.g., via a cable) or wireless (e.g., via wireless communication protocols such as BLE etc.).

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A method for collecting training data for a robotic hand manipulator to automate a manual task of a human, comprising:
- providing a sensorised device configured to be worn by the human while performing the manual task; and
- collecting, using the sensorised device, the training data while the human performs the manual task.

2. The method of claim 1, wherein during the collecting, the robotic hand manipulator is not present at a location at which the human performs the manual task and/or the robotic hand manipulator is not controlled by the human.

3. The method of claim 1, wherein the sensorised device comprises a sensor system for collecting the data which is substantially identical to a sensor system of the robotic hand manipulator;
preferably, wherein both sensor systems comprise:
a finger tracking system;
a wrist tracking system;
a camera system;
a touch sensing system.

4. The method of claim 3, wherein one or more or all sensors of the sensor system of the sensorised device are attached to an outer surface of the sensorised device; and
wherein corresponding one or more or all sensors of the robotic hand manipulator are also attached to an outer surface of the robotic hand manipulator.

5. The method of any one of the claims 1-4, wherein the sensorised device comprises a plurality of finger sleeves and the robotic hand manipulator comprises a corresponding plurality of robotic fingers; and
wherein each finger sleeve of the plurality of finger sleeves of the sensorised device corresponds to a robotic finger of the plurality of robotic fingers of the robotic hand manipulator.

6. The method of any one of the claims 1-5, wherein a format of the collected training data is the same as it would be when collected while the robotic hand manipulator performs the manual task, preferably while being teleoperated.

7. The method of any one of the claims 1-6, wherein the sensorised device is configured to at least partially encapsulate a hand of the human, in particular the outer surface of the hand of the human; and/or
wherein the sensorised device is further configured to be worn such that the human is able to perform the manual task with the human's own hand; and/or
wherein the sensorised device is configured as a glove which at least partially encapsulates an outer surface, in particular a back, of the hand of the human, in particular wherein each finger of the hand of the human is encapsulated individually.

8. The method of any one of the claims 1-7, wherein the training data comprises:
one or more of the following data modalities:
a plurality of images, preferably RGB images, wherein preferably the plurality of images represents one or more sequences of images;
one or more proprioceptive sensory measurement values, preferably a wrist position and/or one or more finger positions;
point cloud data;
tactile sensor data;
torque sensor data;
force sensor data;
audio data;
natural language data; and
one or more corresponding performed actions.

9. A method for automating a manual task using a robotic hand manipulator, comprising:
- obtaining training data for automating the manual task as collected by the method of any one of the claims 1-8;
- training the robotic hand manipulator on the manual task using the obtained training data; and
- deploying the trained robotic hand manipulator at a location at which the manual task is to be automated or providing the trained robotic hand manipulator for deploying the trained robotic hand manipulator at the location at which the manual task is to be automated.

10. The method of claim 9 depending on claim 8, wherein training the robotic hand manipulator comprises training a machine-learning model for generating robot actions; and
wherein the machine-learning model is configured to:
take as input one or more of the data modalities;
generate one or more corresponding robot actions of the robotic hand manipulator; and
evaluate the one or more robot actions based on the one or more performed actions corresponding to the one or more data modalities.

11. The method of claim 10, wherein the machine-learning model comprises different sub-models for different data modalities;
preferably, wherein the machine-learning model is pretrained on a plurality of manual tasks and wherein training the machine-learning model using the collected training data corresponds to fine-tuning the machine-learning model.

12. A data processing device or system comprising means for performing the method of any one of the claims 1-11.

13. A computer program or a computer-readable medium having stored thereon a computer program, the computer program comprising instructions, which when executed by a computer, cause the computer to perform the method of any one of the claims 1-11.

14. A sensorised device for collecting training data for a robotic hand manipulator for automating a manual task of a human, wherein the sensorised device is configured to be worn by the human and to collect the training data according to the method of any one of the claims 1-11 while the human performs the manual task.

15. A robotic hand manipulator for automating a manual task of a human, wherein the robotic hand manipulator is configured to be trained using training data to automate the manual task of the human, wherein the training data is collected by the method of any one of the claims 1-11.
